# EUROPEAN PATENT APPLICATION

(11) **EP 3 817 359 A1**
(43) Date of publication of application: **05.05.2021**
(21) Application number: 18924112.8
(22) Date of filing: 29.06.2018
(51) Int. Cl.: H04N 5/232

(54) **IMAGE DISPLAY METHOD AND DEVICE, PAN/TILT, AND STORAGE MEDIUM**

(71) Applicant: SZ DJI Technology Co., Ltd., Shenzhen, Guangdong 518057 (CN)
(72) Inventor: WANG, Genyuan, Shenzhen, Guangdong 518057 (CN); BAI, Gaoping, Shenzhen, Guangdong 518057 (CN); CHEN, Fen, Shenzhen, Guangdong 518057 (CN)
(74) Representative: Goddar, Heinz J.
(86) International application number: PCT/CN2018/093724
(87) International publication number: WO 2020/000385

(57) **Abstract**

The present disclosure provides an image display method, device, gimbal and storage medium. The method includes determining a display mode of a to-be-displayed image data on a user interface; adjusting the to-be-displayed image data according to the determined display mode; and displaying a target image obtained by adjusting the to-be-displayed image data on the user interface. By using such method, the user is facilitated to freely choose a display mode for image display, which is particularly suitable for a small display screen, thereby improving flexibility of image display.

## Description

### TECHNICAL FIELD

The present disclosure generally relates to the field of control technology and, more particularly, relates to an image display method, device, gimbal and storage medium.

### BACKGROUND

As the quantity of image acquisition and display devices increases, especially the popularization of handheld devices and various cameras, more and more methods are used to collect and display real-time image data. In the context of the smart device being increasingly miniaturized, the size of corresponding display device decreases accordingly. In view of this, a single display method cannot meet the demands of users, and the user experience becomes poor.

When viewing image data on a display device, when the display device is small and the entire image is placed on a substantially small display screen, the user cannot well observe the displayed image on the substantially small display screen, causing poor user experience. Sometimes user wants to see a certain cared part of the screen, and zoom in the screen to show the details. However, the current display device basically displays the image data at a display mode fixed at the manufacturing factory, which cannot be freely selected by the user, and cannot meet the demands and preference of the user. Therefore, how to flexibly display an image on a substantially small-sized display device is a problem that needs to be solved.

### SUMMARY

The present disclosure provides an image display method, device, gimbal and storage medium, which facilitate the user to freely select a display mode of image display, and is especially applicable on a small display screen, thereby improving the flexibility of image display.

A first aspect of the present disclosure provides an image display method, applied to a gimble, the gimbal including a user interface. The method includes:
determining a display mode of a to-be-displayed image data on the user interface;
adjusting the to-be-displayed image data according to the determined display mode; and
displaying a target image obtained by adjusting the to-be-displayed image data on the user interface.

A second aspect of the present disclosure provides an image display device, including a memory and a processor;
the memory being configured to store program instructions;
the processor being configured to execute the program instructions to implement following steps:
determining a display mode of a to-be-displayed image data on a user interface;
adjusting the to-be-displayed image data according to the determined display mode; and displaying the target image obtained by adjusting the to-be-displayed image data on the user interface.

A third aspect of the present disclosure provides a gimbal. The gimbal carries a camera device and includes:
at least two gimbal frames, the gimbal frames being configured to stabilize the camera device;
a user interface; and
a processor, the processor being configured to execute following steps:
   determining a display mode of a to-be-displayed image data on a user interface;
   adjusting the to-be-displayed image data according to the determined display mode; and displaying the target image obtained by adjusting the to-be-displayed image data on the user interface.

A fourth aspect of the present disclosure provides a computer readable-storage medium. The computer-readable storage medium stores a computer program. The computer program, when being executed by a processor, implements the image display method described above in the first aspect.

In embodiments of the present disclosure, the image display device determines a display mode of a to-be-displayed image data on a user interface; adjusts the to-be-displayed image data according to the determined display mode; and displays the target image obtained by adjusting the to-be-displayed image data on the user interface. By using such method, the user is facilitated to freely choose a display mode for image display, which is particularly suitable for a small display screen, thereby improving flexibility of image display.

### BRIEF DESCRIPTION OF THE DRAWINGS

To more clearly illustrate the embodiments of the present disclosure or the technical solution of the existing technology, the drawings needed to be used will be briefly described below. Obviously, the drawings in the following description are certain embodiments of the present disclosure, and other drawings may be obtained by a person of ordinary skill in the art in view of the drawings provided without creative efforts.
FIG. 1 illustrates a schematic structural diagram of an image display system consistent with an embodiment of the present disclosure;
FIG. 2 illustrates a schematic structural diagram of an image display device consistent with an embodiment of the present disclosure;
FIG. 3 illustrates a schematic flowchart of an image display method consistent with an embodiment of the present disclosure;
FIG. 4 illustrates a schematic flowchart of another image display method consistent with an embodiment of the present disclosure;
FIG. 5A illustrates a schematic diagram of an interface of a point selection operation consistent with an embodiment of the present disclosure;
FIG. 5B illustrates a schematic diagram of an interface of a target image region consistent with an embodiment of the present disclosure;
FIG. 5C illustrates a schematic diagram of an interface of a zoomed-in target image region consistent with an embodiment of the present disclosure;
FIG. 6A illustrates a schematic diagram of an interface of a frame selection operation consistent with an embodiment of the present disclosure;
FIG. 6B illustrates a schematic diagram of an interface of another target image region consistent with an embodiment of the present disclosure;
FIG. 6C illustrates a schematic diagram of an interface of another zoomed-in target image region consistent with an embodiment of the present disclosure;
FIG. 7 illustrates a schematic diagram of an interface of an image after complementation processing consistent with an embodiment of the present disclosure;
FIG. 8A illustrates a schematic diagram of an interface of an image data consistent with an embodiment of the present disclosure;
FIG. 8B illustrates a schematic diagram of an interface of a zoomed-in image data consistent with an embodiment of the present disclosure;
FIG. 9 illustrates a schematic flowchart of another image display method consistent with an embodiment of the present disclosure;
FIG. 10A illustrates a schematic diagram of an interface of another image data consistent with an embodiment of the present disclosure;
FIG. 10B illustrates a schematic diagram of an interface of a zoomed-out image data consistent with an embodiment of the present disclosure;
FIG. 10C illustrates a schematic diagram of an interface of another image data consistent with an embodiment of the present disclosure;
FIG. 10D illustrates a schematic diagram of an interface of another zoomed-in image data consistent with an embodiment of the present disclosure;
FIG. 10E illustrates a schematic diagram of an interface of another image after complementation processing consistent with an embodiment of the present disclosure;
FIG. 11 illustrates a schematic structural diagram of an image display device consistent with an embodiment of the present disclosure; and
FIG. 12 illustrates a schematic structural diagram of a gimbal consistent with an embodiment of the present disclosure.

### DETAILED DESCRIPTION OF THE DISCLOSURE

The technical solutions in the embodiments of the present disclosure will be clearly and completely described below in conjunction with the accompanying drawings in the embodiments of the present disclosure. Obviously, the described embodiments are some but not all of the embodiments of the present disclosure. Based on the disclosed embodiments of the present disclosure, persons of ordinary skill in the art may derive other embodiments consistent with the present disclosure without creative work, all of which are within the scope of the present disclosure.

Certain embodiments of the present disclosure will be described in detail below with reference to the accompanying drawings. In the case of no conflict, the following embodiments and features in the embodiments may be combined with each other.

The image display method provided in the embodiments of the present disclosure may be executed by an image display system. The image display system may include an image display device and a gimbal control device, and the image display device may be set on a gimbal. For example, the image display device may be a handle part of the gimbal with display function, or a peripheral display accessory device of the gimbal, which may not be limited herein. The gimbal may be communicatively connected with the gimbal control device. The gimbal control device may include any one terminal device of a mobile phone, a tablet computer, a laptop computer, and a wearable device (watch, bracelet).

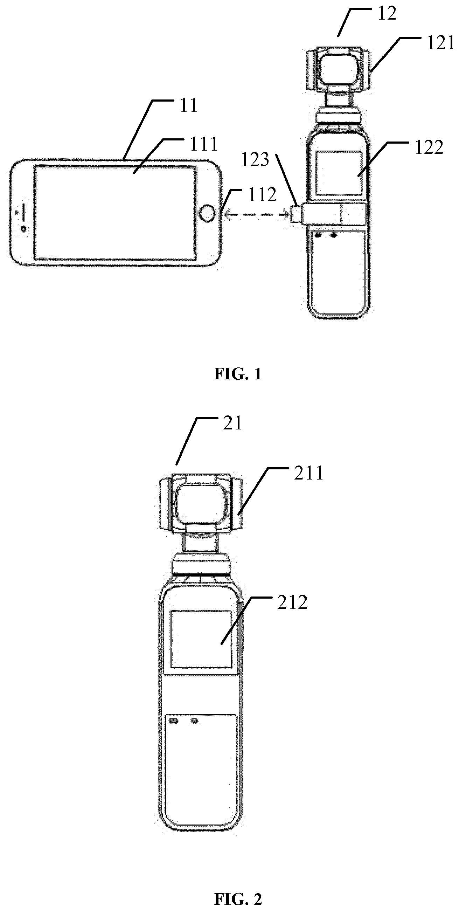

In an embodiment, the image display device may be set on the gimbal, and the gimbal may establish a communication connection with the gimbal control device. In some embodiments, the gimbal may communicate with the gimbal control device by establishing a detachable connection. For example, the gimbal may include a detachable connector, and the gimbal may achieve a communication connection with the gimbal control device through the detachable connector. Certainly, the gimbal may communicate with the gimbal control device through a wireless communication method such as WIFI, Bluetooth, etc., which may not be limited herein. In certain embodiments, a user interface for displaying the image data may be a user interface of the gimbal. FIG. 1 illustrates a schematic structural diagram of an image display system consistent with an embodiment of the present disclosure. Referring to FIG. 1, the image display system shown in FIG. 1 may include a gimbal control device as a mobile phone 11, and a gimbal 12 for being set with an image display device. Further, the mobile phone 11 may include a display screen 111 and a user interface 112. The gimbal 12 may be mounted with a camera 121, may be provided with a user interface 122, and may be provided with a detachable connector 123. The camera 121 may be configured to photograph an image, and the user interface 122 may be configured to display the image data. The user interface 122 may be a display screen with a small size such as 3×3 cm². The detachable connector 123 may be configured to enable the detachable connector 123 of the gimbal 12 to be detachably connected with the user interface 112 of the mobile phone 11 to establish a communication connection.

In an embodiment, the image display device may be set on a gimbal as shown in FIG. 2. FIG. 2 illustrates a schematic structural diagram of an image display device consistent with an embodiment of the present disclosure. Referring to FIG. 2, the image display device may be set on a gimbal 21. The gimbal 21 may be mounted with a camera 211 and may be provided with a user interface 212. The camera 211 may be configured to photograph an image, and the user interface 212 may be configured to display the image data photographed by the camera 211 or display received to-be-displayed image data sent by any other terminal device.

The image display method provided by the embodiments of the present disclosure may be illustratively described below.

In an embodiment of the present disclosure, when using the image display device to display the image data, by setting a plurality of image display modes, the image display device may freely and diversely select the user interface of the image on the image display device such as a display position on the screen, angle of view, full screen/non-full screen, display portion, or any other mode, which may solve the shortcomings of inflexible image display in small-sized image display device.

In the disclosed embodiments of the present disclosure, the user can freely select the display mode of the image data on the user interface of the image display device. In an embodiment, the user may select the display mode of image data on the user interface of the image display device through a display mode button set on the user interface of the image display device. The display mode may include one or more modes. After the user selects and determines the display mode of the image data on the user interface, the image display device may determine the display mode of the to-be-displayed image data on the user interface according to the obtained display mode selected by the user, may adjust the to-be-displayed image data to obtain a target image according to the determined display mode, and may display the target image obtained by adjusting the to-be-displayed image data on the user interface. In certain embodiments, the user interface for displaying the image data may be a user interface of the gimbal. In certain embodiments, the user interface of the image display device may be the user interface 122 of the gimbal 12. The disclosed embodiments of the present disclosure may not specifically limit the size of the image display device and the user interface of the image display device.

The image display method applied to the gimbal may be illustrated below with reference to the accompanying drawings.

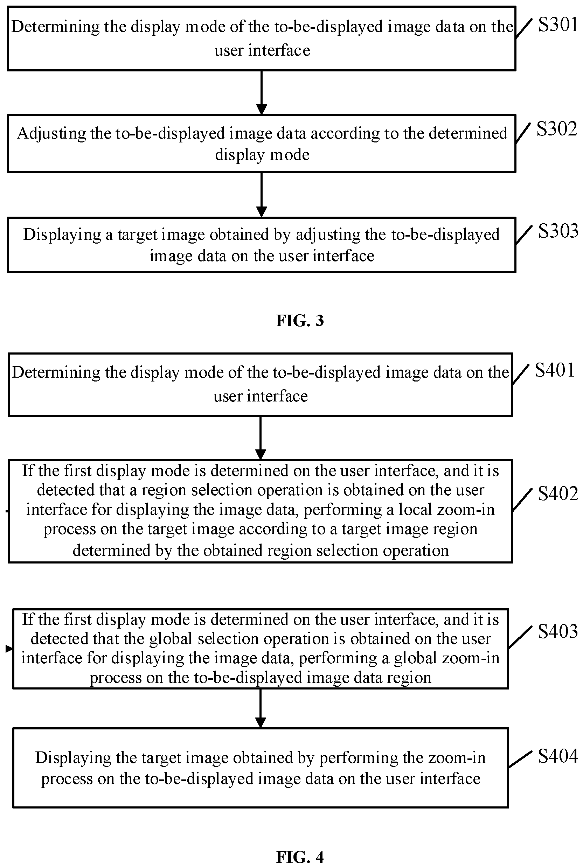

FIG. 3 illustrates a schematic flowchart of an image display method consistent with an embodiment of the present disclosure. Referring to FIG. 3, the method may be executed by the image display device, and the image display device may be set on the gimbal. The specific explanation may be described above. Specifically, the image display method in the disclosed embodiments of the present disclosure may include following steps.

In S301: determining the display mode of the to-be-displayed image data on the user interface.

In the disclosed embodiments of the present disclosure, the image display device may determine the display mode of the to-be-displayed image data on the user interface. In a specific implementation process, the image display device may obtain the mode selection operation on the user interface of the gimbal for displaying the image data, and according to the obtained mode selection operation, may determine the display mode of the to-be-displayed image data on the user interface of the image display device. In certain embodiments, the mode selection operation may be a point selection operation or a frame selection operation. In certain embodiments, the point selection operation may be any one or more of a single point selection operation, a double point selection operation, and a long-press operation obtained on the user interface of the image display device for displaying the image data.

In one embodiment, the user interface may be a user interface of the gimbal, and the display mode on the user interface may be determined by setting the gimbal. In certain embodiments, the display mode on the user interface of the gimbal may be set and determined on a gimbal control device such as a mobile phone that establishes a detachable connection with the gimbal.

In S302: adjusting the to-be-displayed image data according to the determined display mode.

In the disclosed embodiments of the present disclosure, the image display device may adjust the to-be-displayed image data according to the determined display mode of the to-be-displayed image data on the user interface. The display mode may include a first display mode and a second display mode.

In an embodiment, if the image display device determines that the display mode of the to-be-displayed image data on the user interface is the first display mode, the to-be-displayed image data may be adjusted according to a first rule. The specific implementation process may be illustrated by an example. Assuming that the first display mode is a full-screen display mode, if the image display device on the user interface of the gimbal determines that the display mode of the to-be-displayed image data on the user interface is the full-screen display mode, the to-be-displayed image data may be adjusted according to the first rule associated with the full-screen display mode. Further, the first rule may include a global adjustment rule and/or a local adjustment rule.

In an embodiment, if the image display device determines that the display mode of the to-be-displayed image data on the user interface is the second display mode, the to-be-displayed image data may be adjusted according to a second rule. The specific implementation process may be illustrated by an example. Assuming that the second display mode is a full-image display mode, if the image display device on the user interface of the gimbal determines that the display mode of the to-be-displayed image data on the user interface is the full-image display mode, the to-be-displayed image data may be adjusted according to the second rule associated with the full-image display mode.

In S303: displaying a target image obtained by adjusting the to-be-displayed image data on the user interface.

In the disclosed embodiments of the present disclosure, the image display device may display the target image obtained by adjusting the to-be-displayed image data on the user interface.

In an embodiment, the image display device may display the target image obtained by adjusting the to-be-displayed image data according to the first rule on the user interface. Specifically, the image display device may obtain the target image by adjusting the to-be-displayed image data according to the first rule and may display the target image on the user interface of the gimbal.

In another embodiment, the image display device may display the target image obtained by adjusting the to-be-displayed image data according to the second rule on the user interface. Specifically, the image display device may obtain the target image by adjusting the to-be-displayed image data according to the second rule and may display the target image on the user interface of the gimbal.

In the disclosed embodiments of the present disclosure, the image display device may determine the display mode of the to-be-displayed image data on the user interface, may adjust the to-be-displayed image data according to the determined display mode, and may display the target image obtained by adjusting the to-be-displayed image data on the user interface, to facilitate the user to freely select the display mode of the image display, which is especially applicable for a small display screen, thereby improving the flexibility of image display.

FIG. 4 illustrates a schematic flowchart of another image display method consistent with an embodiment of the present disclosure. Referring to FIG. 4, the method may be executed by the image display device, and the image display device may be set on the gimbal. The specific explanation of the image display device is described above. The difference between these embodiments and the embodiments described in FIG. 3 may include that these embodiments describe in detail the specific process of adjusting the to-be-displayed image data in the first display mode.

In S401: determining the display mode of the to-be-displayed image data on the user interface.

In the disclosed embodiments of the present disclosure, the image display device may determine the display mode of the to-be-displayed image data on the user interface.

In S402: if the first display mode is determined on the user interface, and it is detected that a region selection operation is obtained on the user interface for displaying the image data, according to a target image region determined by the obtained region selection operation, performing a local zoom-in process on the target image.

In the disclosed embodiments of the present disclosure, if the image display device determines that the display mode of the to-be-displayed image data on the user interface is the first display mode, it may be detected whether the region selection operation is obtained on the user interface for displaying the image data. If the detection result is that the region selection operation is obtained, according to the target image region determined by the obtained region selection operation, the local zoom-in process may be performed on the target image.

The region selection operation may include a point selection operation. In an embodiment, when performing the zoom-in process on the target image region according to the target image region determined by the obtained region selection region, the image display device may obtain the point selection operation on the user interface for displaying the to-be-displayed image data, may determine the point selection image region according to the point selection operation, may determine the determined point selection image region as the target image region, and then may perform the zoom-in process on the image in the point selection image region. In a specific implementation process, the user may select the interested image region on the user interface of the gimbal by a point selection, double-point selection, or any other suitable point selection operation. The image display device may automatically determine the point selection image region according to the obtained user's point selection operation, and may perform the zoom-in process on the image in the point selection image region. The disclosed embodiments of the present disclosure may not specifically limit the manner in which the image display device automatically determines the point selection image region according to the obtained point selection operation.

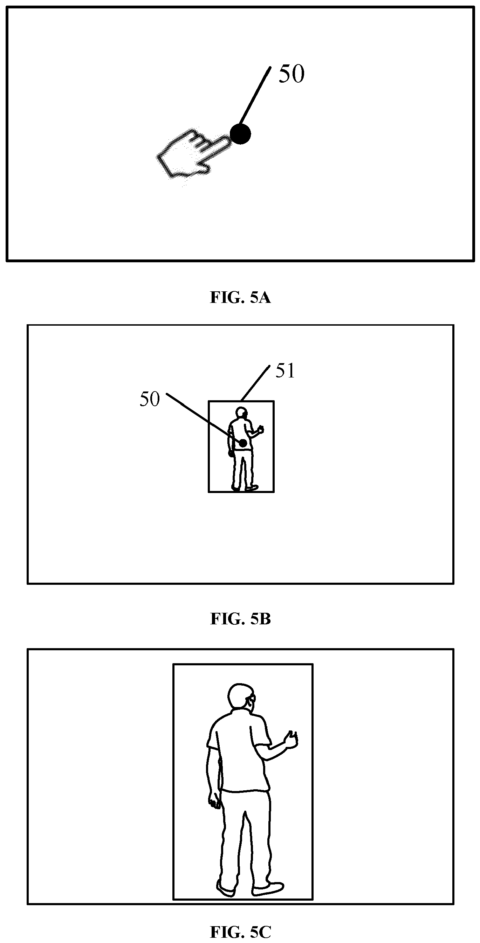

Specifically, FIG. 5A, FIG. 5B, and FIG. 5C may be used as examples. FIG. 5A illustrates a schematic diagram of an interface of a point selection operation consistent with an embodiment of the present disclosure, FIG. 5B illustrates a schematic diagram of an interface of a target image region consistent with an embodiment of the present disclosure, and FIG. 5C illustrates a schematic diagram of an interface for zooming-in a target image region consistent with an embodiment of the present disclosure. As shown in the schematic diagram of the interface shown in FIG. 5A, through the point selection operation 50 by a user on the user interface for displaying the image data shown in FIG. 5A, the point selection image region 51 shown in FIG. 5B is automatically determined, and the point selection image region 51 is used as the target image region. Accordingly, a zoom-in process may be performed on the determined image in the point selection image region 51, to obtain the image displayed in the schematic diagram of the interface shown in FIG. 5C.

In an embodiment, the region selection operation may further include a frame selection operation. When performing the zoom-in process on the target image region according to the target image region determined by the obtained region selection region, the image display device may obtain the frame selection operation on the user interface for displaying the to-be-displayed image data, may determine the frame selection image region according to the frame selection operation, and then may perform the zoom-in process on the image in the determined frame selection image region. In a specific implementation process, the user may select the interested image region on the user interface of the gimbal by a frame-drag selection, or any other suitable frame selection operation. The image display device may obtain the determined frame selection image region according to the user's frame selection operation, and may perform the zoom-in process on the image in the frame selection image region.

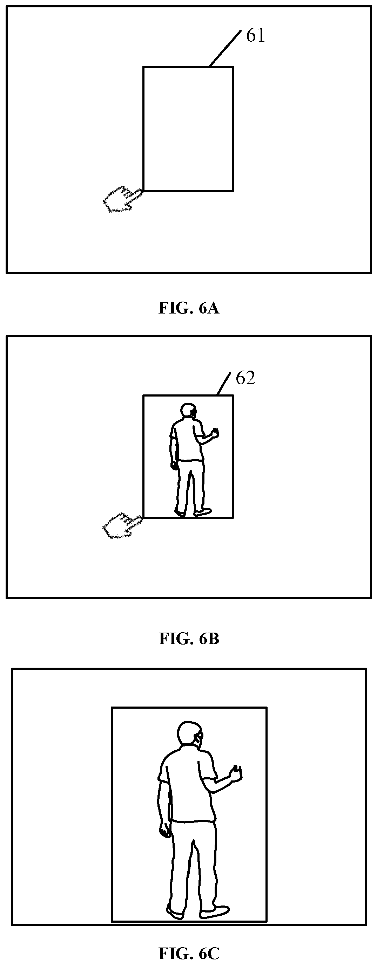

Specifically, FIG. 6A, FIG. 6B, and FIG. 6C may be used as examples. FIG. 6A illustrates a schematic diagram of an interface of a frame selection operation consistent with an embodiment of the present disclosure, FIG. 6B illustrates a schematic diagram of an interface of another target image region consistent with an embodiment of the present disclosure, and FIG. 6C illustrates a schematic diagram of an interface for zooming-in a target image region consistent with an embodiment of the present disclosure. The image display device may obtain the frame selection operation 61 on the user interface for displaying the to-be-displayed image data as shown in FIG. 6A. According to the frame selection operation 61, the frame selection image region 62 as shown in FIG. 6B may be determined. Therefore, the image display device may perform the zoom-in process on the determined image in the frame selection image region 62 to obtain the image displayed in the schematic diagram of the interface shown in FIG. 6C.

In an embodiment, after performing the local zoom-in process on the target image region, the image display device may detect whether there is a blank image region in the image data region obtained by performing the local zoom-in process on the target image region. If the detection result shows that there is a blank image region, the blank image region may be complemented according to a preset complementation rule. In one embodiment, the image display device may automatically complement the remaining data in the user interface scale according to the target image region determined by the frame selection operation, to enlarge the determined target image region to be fully displayed on the user interface of the image display device.

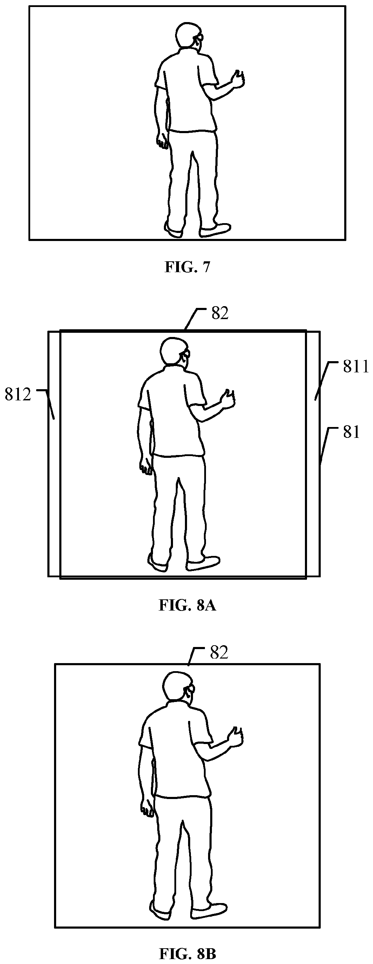

Specifically, FIG. 6C and FIG. 7 may be used as examples. FIG. 7 illustrates a schematic diagram of an interface of an image after complementation processing consistent with an embodiment of the present disclosure, and FIG. 6C illustrates a schematic diagram of the interface after zooming-in the target image region. As shown in FIG. 6C, it may be detected that there is a blank image region in the image data region obtained by performing the local zoom-in process on the target image region, and then the blank image region may be complemented according to the preset complementation rule, to enlarge the determined target image region to be fully displayed on the user interface of the image display device, to obtain the schematic diagram of the interface shown in FIG. 7.

In S403: if the first display mode is determined on the user interface, and it is detected that the global selection operation is obtained on the user interface for displaying the image data, performing a global zoom-in process on the to-be-displayed image data region.

In the disclosed embodiments of the present disclosure, when the image display device determines that the display mode of the to-be-displayed image data on the user interface is the first display mode, if it is detected that the global selection operation is obtained on the user interface for displaying the image data, the image display device may directly perform the global zoom-in process on the to-be-displayed image data region.

In an embodiment, when performing the global zoom-in process on the to-be-displayed image data region, the image display device may obtain the size information of the user interface of the image display device, and may obtain the size information of the to-be-displayed image data. According to the size information of the user interface and the size information of the to-be-displayed image data, the to-be-displayed image data may be cropped according to an alignment manner.

The size information may include width information and height information. In an embodiment, when the width information of the user interface is greater than the height information, based on the width information and height information of the to-be-displayed image data, the image display device may down-scale sampling the to-be-displayed image data according to an alignment manner, and may crop the image region that exceeds the user interface. The alignment manner may include align left, align right align, align center, and full justify, etc. Through such embodiment, the full-screen display of the image may be satisfied, and the image details may not be lost.

Specifically, FIG. 8A and FIG. 8B may be used as examples for description. FIG. 8A illustrates a schematic diagram of an interface of an image data consistent with an embodiment of the present disclosure, and FIG. 8B illustrates a schematic diagram of an interface for zooming-in the image data consistent with an embodiment of the present disclosure. Assuming that the user interface 82 has width information w and height information h, and a ratio of the to-be-displayed image data 81 collected by a camera is R, according to the width information w and height information h of the user interface 82 and the ratio R of the to-be-displayed image data 81 collected by the camera, it may be determined that the to-be-displayed image data 81 may have width information w*R and height information h*R. If the determined justify manner is align left, the to-be-displayed image data 81 may be proportionally down-scale sampled according to a left-alignment manner. Therefore, the image region 811 and the image region 812 that exceed the user interface may be cropped to obtain the schematic diagram of the interface shown in FIG. 8B.

In S404: displaying the target image obtained by performing the zoom-in process on the to-be-displayed image data on the user interface.

In the disclosed embodiments of the present disclosure, the image display device may display the target image obtained by performing the zoom-in process on the to-be-displayed image data on the user interface. In an embodiment, the image display device may display the target image obtained by performing the zoom-in process on the target image region of the to-be-displayed image data on the user interface. In another embodiment, the image display device may display the target image obtained by performing the global zoom-in process on the to-be-displayed image data on the user interface.

In the disclosed embodiments of the present disclosure, if the first display mode on the user interface is determined, and it is detected that a region selection operation is obtained on the user interface for displaying the image data, the image display device may locally enlarge the target image according to the target image region determined by the obtained region selection operation. If it is detected that the region selection operation is not obtained on the user interface for displaying the image data, the image display device may globally enlarge the to-be-displayed image data region, and may display the target image obtained by performing the zoom-in process on the to-be-displayed image data on the user interface. In this way, the flexibility of image display may be improved.

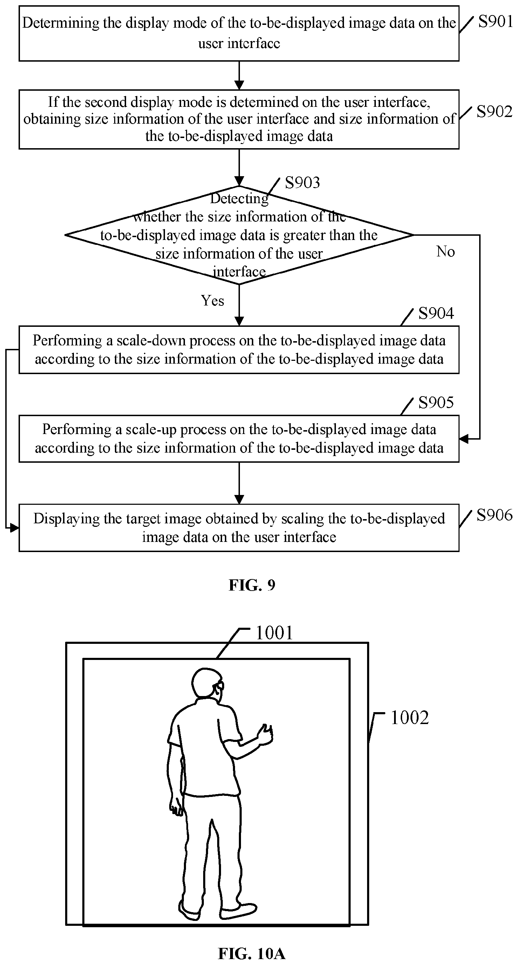

FIG. 9 illustrates a schematic flowchart of another image display method consistent with an embodiment of the present disclosure. Referring to FIG. 9, the method may be executed by the image display device, and the image display device may be set on the gimbal. The specific explanation of the image display device may be described above. The difference between the embodiments associated with FIG. 9 and the embodiments described in FIG. 4 may include that the embodiments associated with FIG. 9 may describe in detail the specific process of adjusting the to-be-displayed image data in the second display mode.

In S901: determining the display mode of the to-be-displayed image data on the user interface.

In the disclosed embodiments of the present disclosure, the image display device may determine the display mode of the to-be-displayed image data on the user interface. The specific implementation process may be described above, and may not be repeated herein.

In S902: if the second display mode is determined on the user interface, obtaining size information of the user interface and size information of the to-be-displayed image data.

In the disclosed embodiments of the present disclosure, if the image display device determines that the display mode of the to-be-displayed image data on the user interface is the second display mode, the size information of the user interface and the size information of the to-be-displayed image data may be obtained. The size information may include width information and height information.

In S903: detecting whether the size information of the to-be-displayed image data is greater than the size information of the user interface. If the detection result is yes, executing step S904, or if the detection result is no, executing step S905.

In the disclosed embodiments of the present disclosure, the image display device may detect whether the size information of the to-be-displayed image data is greater than the size information of the user interface. If it is detected that the size information of the to-be-displayed image data is greater than the size information of the user interface, step S904 may be executed. If it is detected that the size information of the to-be-displayed image data is not greater than the size information of the user interface, step S905 may be executed.

In S904: performing a proportional scale-down process on the to-be-displayed image data according to the size information of the to-be-displayed image data.

In the disclosed embodiments of the present disclosure, if the image display device detects that the size information of the to-be-displayed image data is greater than the size information of the user interface, a proportional scale-down process may be performed on the to-be-displayed image data according to the size information of the to-be-displayed image data. In a specific implementation process, if the user selects a full-screen display mode on the user interface, when the image size is larger than the user interface (such as the screen size), the image may be down-sampled in proportion according to the image ratio until the entire image fits in the user interface and the width and/or height of the image is equal to the corresponding width and/or height of the user interface.

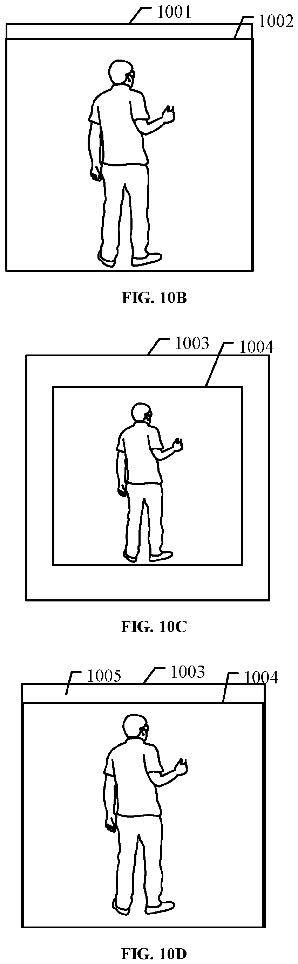

FIG. 10A illustrates a schematic diagram of another interface of the image data consistent with an embodiment of the present disclosure, and FIG. 10B illustrates a schematic diagram of an interface of a zoomed-out image data consistent with an embodiment of the present disclosure. As shown in Figures 10A and 10B, if user selects the full-screen display mode on the user interface 1001 shown in FIG. 10A and the size of the image 1002 is larger than the size of the user interface 1001, the image 1002 may be sampled and scaled down according to the ratio of the image 1002 until the entire image 1002 fits the user interface 1001 and the width of image 1002 shown in FIG. 10B is equal to the corresponding width of the user interface 1001.

In S905: performing a proportional scale-up process on the to-be-displayed image data according to the size information of the to-be-displayed image data.

In the disclosed embodiments of the present disclosure, if the image display device detects that the size information of the to-be-displayed image data is not greater than the size information of the user interface, a scale-up interpolation process may be performed on the to-be-displayed image data according to the size information of the to-be-displayed image data. In a specific implementation process, if user selects the full-screen display mode on the user interface, when the image size is not greater than the user interface (such as the screen size), the image may be interpolated and enlarged according to the image ratio until the entire image fits the user interface and the width and/or height of the image is equal to the width and/or height of the user interface.

FIG. 10C illustrates a schematic diagram of an interface of another image data consistent with an embodiment of the present disclosure, and FIG. 10D illustrates a schematic diagram of an interface of an enlarged image data consistent with an embodiment of the present disclosure. As shown in FIG. 10C and FIG. 10D, if user selects the full-screen display mode on the user interface 1003 shown in FIG. 10C and the size of the image 1004 is smaller than the size of the user interface 1003, the image 1004 may be interpolated and scaled-up until the entire image 1004 fits the user interface 1003 and the width of the image 1004 shown in FIG. 10D is equal to the corresponding width of the user interface 1003.

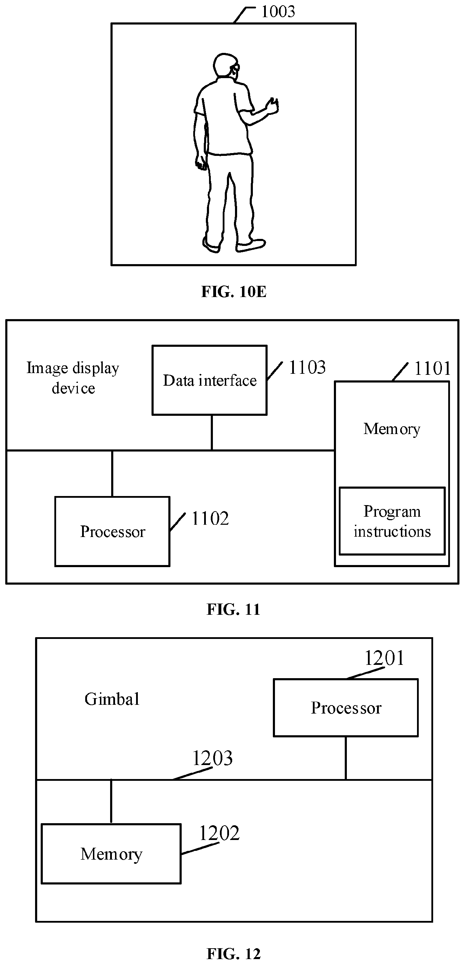

In an embodiment, after performing a scaling process on the to-be-displayed image data, the image display device may detect whether there is a blank image region in the image data region. If it is detected that there is a blank image region in the scaled image data region, a complementation process may be performed on the blank image region according to a preset complementation rule. FIG. 10E illustrates a schematic diagram of another interface of a complemented image consistent with an embodiment of the present disclosure. Taking FIG. 10D and FIG. 10E as an example, there is a blank image region 1005 in the enlarged image as shown in FIG. 10D, and the complementation process may be performed on the blank image region 1005 to obtain the schematic diagram of the complemented interface shown in FIG. 10E.

In an embodiment, when the image display device performs the complementation process on the blank image region according to the preset complementation rule, through a manner of complementing a black border or a UI diagram, the blank image region in the image data region obtained by performing the scaling process on the to-be-displayed image data may be complemented to achieve a full-image display.

In S906: displaying the target image obtained by scaling the to-be-displayed image data on the user interface.

In the disclosed embodiments of the present disclosure, the image display device may display the target image obtained by scaling the to-be-displayed image data on the user interface. In an embodiment, the image display device may display the target image obtained by performing the proportional scale-down process on the to-be-displayed image data according to the size information of the to-be-displayed image data on the user interface. In another embodiment, the image display device may display the target image obtained by performing the proportional scale-up process on the to-be-displayed image data according to the size information of the to-be-displayed image data on the user interface.

In the disclosed embodiments of the present disclosure, if the second display mode is determined on the user interface, the image display device may obtain the size information of the user interface and the size information of the to-be-displayed image data. If it is detected that the size information of the image data is greater than the size information of the user interface, the scale-down process may be performed on the to-be-displayed image data according to the size information of the to-be-displayed image data. If it is detected that the size information of the to-be-displayed image data is not greater than the size information of the user interface, the proportional scale-up process may be performed on the to-be-displayed image data according to the size information of the to-be-displayed image data. In this way, the flexibility of image display may be improved.

FIG. 11 illustrates a schematic structural diagram of an image display device consistent with an embodiment of the present disclosure. Referring to FIG. 11, specifically, the image display device may include a memory 1101, a processor 1102, and a data interface 1103.

The data interface 1103 may be configured to transmit data information between the image display device and the gimbal.

The memory 1101 may include a volatile memory; the memory 1101 may alternatively include a non-volatile memory; the memory 1101 may also include a combination of the previous types of memories. The processor 1102 may be a central processing unit (CPU). The processor 1102 may further include a hardware chip. The above hardware chip may include an application-specific integrated circuit (ASIC), a programmable logic device (PLD), or a combination thereof. The above PLD may include a complex programmable logic device (CPLD), a field-programmable gate array (FPGA), or any combination thereof.

The memory 1101 may be configured to store program instructions, and the processor 1102 may execute the program instructions stored in the memory 1101 to implement following steps:
determining the display mode of the to-be-displayed image data on the user interface;
adjusting the to-be-displayed image data according to the determined display mode; and
displaying the target image obtained by adjusting the to-be-displayed image data on the user interface.

Further, the processor 1102 may call program instructions stored in the memory 1101 to execute following steps:
obtaining a mode selection operation on the user interface for displaying the to-be-displayed image data; and
according to the mode selection operation, determining the display mode of the to-be-displayed image data on the user interface.

Further, the display mode may include a first display mode and a second display mode. The processor 1102 may execute the program instructions stored in the memory 1101 to implement following steps:
if the first display mode is determined on the user interface, adjusting the to-be-displayed image data according to a first rule; and
if the second display mode is determined on the user interface, adjusting the to-be-displayed image data according to a second rule.

Further, the processor 1102 may execute the program instructions stored in the memory 1101 to implement following steps:

Further, the processor 1102 may execute the program instructions stored in the memory 1101 to implement following steps:
detecting whether a region selection operation is obtained on the user interface for displaying the image data; and
if the detection result is yes, performing a local zoom-in process on the target image according to the target image region determined by the obtained region selection operation.

Further, the region selection operation may include a point selection operation. The processor 1102 may execute the program instructions stored in the memory 1101 to implement following steps:
obtaining the point selection operation on the user interface for displaying the to-be-displayed image data; determining a point selection image region according to the point selection operation; and
performing a zoom-in process on the image in the determined point selection image region.

Further, the point selection operation may include a single click operation or a double click operation on a terminal screen displaying the image data.

Further, the region selection operation may include a frame selection operation. The processor 1102 may call program instructions stored in the memory 1101, and may be configured to execute following steps:
obtaining a frame selection operation on the user interface for displaying the to-be-displayed image data;
determining the frame selection image region according to the frame selection operation; and performing a zoom-in process on the image in the determined frame selection image region.

Further, the processor 1102 may call program instructions stored in the memory 1101, and may be configured to execute following steps:
detecting whether there is a blank image region in the image data region obtained by performing a local zoom-in process on the target image region; and
if the detection result is yes, performing a complementation process on the blank image region according to the preset complementation rule.

Further, the processor 1102 may call program instructions stored in the memory 1101, and may be configured to execute following steps:
according to the target image region determined by the region selection operation,
automatically complementing the remaining data under a scale of the user interface.

Further, the processor 1102 may call program instructions stored in the memory 1101, and may be configured to execute following steps:
detecting whether a global selection operation is obtained on the user interface for displaying the image data; and
if the detection result is yes, performing a global zoom-in process on the to-be-displayed image data region.

Further, the processor 1102 may call program instructions stored in the memory 1101, and may be configured to execute following steps:
obtaining size information of the user interface;
determining size information of the to-be-displayed image data; and
according to the size information of the user interface and the size information of the to-be-displayed image data, performing a cropping process on the to-be-displayed image data according to an alignment manner.

Further, the size information may include width information and height information. The processor 1102 may call program instructions stored in the memory 1101, and may be configured to execute following steps:
when the width information of the user interface is greater than the height information thereof, according to the width information and height information of the to-be-displayed image data, performing a scale-down sampling on the to-be-displayed image data according to an alignment manner, and cropping the part of the screen exceeding the user interface.

Further, the processor 1102 may call program instructions stored in the memory 1101, and may be configured to execute following steps:
obtaining size information of the user interface and size information of the to-be-displayed image data; and
according to the size information of the user interface and the size information of the to-be-displayed image data, performing a scaling process on the to-be-displayed image data.

Further, the processor 1102 may call program instructions stored in the memory 1101, and may be configured to execute following steps:
detecting whether the size information of the to-be-displayed image data is greater than the size information of the user interface; and
if the detection result is yes, performing a scale-down process on the to-be-displayed image data according to the size information of the to-be-displayed image data; or
if the detection result is no, performing a scale-up process on the to-be-displayed image data according to the size information of the to-be-displayed image data.

Further, the processor 1102 may call program instructions stored in the memory 1101, and may be configured to execute following steps:
detecting whether there is a blank image region in the image data region obtained by performing the scaling process on the to-be-displayed image data; and
if the detection result is yes, performing a complementation process on the blank image region according to the preset complementation rule.

Further, the processor 1102 may call program instructions stored in the memory 1101, and may be configured to execute following steps:
through a manner of complementing a black border or a UI diagram, complementing the blank image region in the image data region obtained by performing the scaling process on the to-be-displayed image data.

In the disclosed embodiments of the present disclosure, the image display device may determine the display mode of the to-be-displayed image data on the user interface, may adjust the to-be-displayed image data according to the determined display mode, and may display the target image obtained by adjusting the to-be-displayed image data on the user interface. In this way, the user may freely select the display mode of the image display, which is especially suitable for a small display screen, thereby improving.

FIG. 12 illustrates a schematic structural diagram of a gimbal consistent with an embodiment of the present disclosure. Referring to FIG. 12, specifically, the gimbal may include: a processor 1201 and a memory 1202. The processor 1201 and the memory 1202 may be connected through a bus 1203.

The processor 1201 may be configured to execute following steps:
determining the display mode of the to-be-displayed image data on the user interface;
adjusting the to-be-displayed image data according to the determined display mode; and displaying the target image obtained by adjusting the to-be-displayed image data on the user interface.

Further, the processor 1201 may be configured to execute following steps:
obtaining a mode selection operation on the user interface for displaying the to-be-displayed image data; and
according to the mode selection operation, determining the display mode of the to-be-displayed image data on the user interface.

Further, the processor 1201 may be configured to execute following steps:
if the first display mode is determined on the user interface, adjusting the to-be-displayed image data according to a first rule; and
if the second display mode is determined on the user interface, adjusting the to-be-displayed image data according to a second rule.

Further, the processor 1201 may be configured to execute following steps:
detecting whether a region selection operation is obtained on the user interface for displaying the image data; and
if the detection result is yes, performing a local zoom-in process on the target image according to the target image region determined by the obtained region selection operation.

Further, the processor 1201 may be configured to execute following steps:
obtaining the point selection operation on the user interface for displaying the to-be-displayed image data;
determining a point selection image region according to the point selection operation; and
performing a zoom-in process on the image in the determined point selection image region.

Further, the point selection operation may include a single click operation or a double click operation on a terminal screen displaying the image data.

Further, the processor 1201 may be configured to execute following steps:
obtaining a frame selection operation on the user interface for displaying the to-be-displayed image data;
determining the frame selection image region according to the frame selection operation; and
performing a zoom-in process on the image in the determined frame selection image region.

Further, the processor 1201 may be configured to execute following steps:
detecting whether there is a blank image region in the image data region obtained by performing a local zoom-in process on the target image region; and
if the detection result is yes, performing a complementation process on the blank image region according to the preset complementation rule.

Further, the processor 1201 may be configured to execute following steps:
according to the target image region determined by the region selection operation,
automatically complementing the remaining data under a scale of the user interface.

Further, the processor 1201 may be configured to execute following steps:
detecting whether a global selection operation is obtained on the user interface for displaying the image data; and
if the detection result is yes, performing a global zoom-in process on the to-be-displayed image data region.

Further, the processor 1201 may be configured to execute following steps:
obtaining size information of the user interface;
determining size information of the to-be-displayed image data; and
according to the size information of the user interface and the size information of the to-be-displayed image data, performing a cropping process on the to-be-displayed image data according to an alignment manner.

Further, the processor 1201 may be configured to execute following steps:
when the width information of the user interface is greater than the height information thereof, according to the width information and height information of the to-be-displayed image data, performing a scale-down sampling on the to-be-displayed image data according to an alignment manner, and cropping the part of the screen exceeding the user interface.

Further, the processor 1201 may be configured to execute following steps:
obtaining size information of the user interface and size information of the to-be-displayed image data; and
according to the size information of the user interface and the size information of the to-be-displayed image data, performing a scaling process on the to-be-displayed image data.

Further, the processor 1201 may be configured to execute following steps:
detecting whether the size information of the to-be-displayed image data is greater than the size information of the user interface; and
if the detection result is yes, performing a scale-down process on the to-be-displayed image data according to the size information of the to-be-displayed image data; or
if the detection result is no, performing a scale-up process on the to-be-displayed image data according to the size information of the to-be-displayed image data.

Further, the processor 1201 may be configured to execute following steps:
detecting whether there is a blank image region in the image data region obtained by performing the scaling process on the to-be-displayed image data; and
if the detection result is yes, performing a complementation process on the blank image region according to the preset complementation rule.

Further, the processor 1201 may be configured to execute following steps:
through a manner of complementing a black border or a UI diagram, complementing the blank image region in the image data region obtained by performing the scaling process on the to-be-displayed image data.

Further, the image data may be an image data captured by the camera device.

In the disclosed embodiments of the present disclosure, the image display device may determine the display mode of the to-be-displayed image data on the user interface, may adjust the to-be-displayed image data according to the determined display mode, and may display the target image obtained by adjusting the to-be-displayed image data on the user interface. In this way, the user may freely select the display mode of the image display, especially for a small display screen, which may improve the flexibility of image display.

The disclosed embodiments of the present disclosure also provide a computer-readable storage medium. The computer-readable storage medium may store a computer program, and the computer program may be executed by a processor to achieve the image display method described in the corresponding embodiments associated with FIG. 3, FIG. 4 or FIG. 9 in the present disclosure, and to achieve the image display device described in corresponding embodiments associated with FIG. 11 or the gimbal described in the corresponding embodiments associated with FIG. 12 in the present disclosure, which may not be repeated herein.

The computer-readable storage medium may be an internal storage unit of the device described in any of the foregoing embodiments, such as a hard disk or memory of the device. The computer-readable storage medium may also be an external storage device of the device, such as a plug-in hard disk, a smart media card (SMC), a secure digital (SD) card, or a flash card, etc., equipped on the device. Further, the computer-readable storage medium may also include both an internal storage unit of the device and an external storage device. The computer-readable storage medium may be configured to store the computer program and any other program and data required by the terminal. The computer-readable storage medium may also be configured to temporarily store data that has been outputted or is going to be outputted.

Those of ordinary skill in the art may understand that all or part of the processes in the above-mentioned embodiment methods may be implemented by instructing relevant hardware through the computer program. The program may be stored in the computer-readable storage medium. When being executed, the program may include the procedures of the above-mentioned method embodiments. Further, the storage medium may include a magnetic disk, an optical disc, a read-only memory (ROM), or a random-access memory (RAM), etc.

The above detailed descriptions are merely exemplary embodiments of the present disclosure, and are not intended to limit the scope of the present disclosure. Any equivalent or modification thereof within the technical scope disclosed in the present disclosure and easily thought by those skilled in the art shall be covered by the scope of the present disclosure.

## Claims

1. An image display method applied to a gimbal, the gimbal including a user interface, comprising:
determining a display mode of a to-be-displayed image data on the user interface;
adjusting the to-be-displayed image data according to the determined display mode; and
displaying a target image obtained by adjusting the to-be-displayed image data on the user interface.

2. The method according to claim 1, wherein determining the display mode of the to-be-displayed image data on the user interface includes:
obtaining a mode selection operation on the user interface for displaying the to-be-displayed image data; and
according to the mode selection operation, determining the display mode of the to-be-displayed image data on the user interface.

3. The method according to claim 1, wherein the display mode includes a first display mode and a second display mode, and adjusting the to-be-displayed image data according to the determined display mode includes:
if the first display mode is determined on the user interface, adjusting the to-be-displayed image data according to a first rule, and
if the second display mode is determined on the user interface, adjusting the to-be-displayed image data according to a second rule.

4. The method according to claim 3, wherein adjusting the to-be-displayed image data according to the first rule includes:
detecting whether a region selection operation is obtained on the user interface for displaying the image data; and
if the detection result is yes, performing a local zoom-in process on the target image according to a target image region determined by the obtained region selection operation.

5. The method according to claim 4, wherein the region selection operation includes a point selection operation, and performing the local zoom-in process on the target image according to the target image region determined by the obtained region selection operation includes:
obtaining the point selection operation on the user interface for displaying the to-be-displayed image data;
determining a point selection image region according to the point selection operation; and
performing a zoom-in process on an image in the determined point selection image region.

6. The method according to claim 5, wherein:
the point selection operation includes a single click operation or a double click operation on a terminal screen displaying the image data.

7. The method according to claim 4, wherein the region selection operation includes a frame selection operation, and performing the local zoom-in process on the target image according to the target image region determined by the obtained region selection operation includes:
obtaining a frame selection operation on the user interface for displaying the to-be-displayed image data;
determining a frame selection image region according to the frame selection operation; and
performing a zoom-in process on an image in the determined frame selection image region.

8. The method according to any one of claims 5-7, after performing the local zoom-in process on the target image region, further including:
detecting whether a blank image region exists in an image data region obtained by performing the local zoom-in process on the target image region; and
if the detection result is yes, performing a complementation process on the blank image region according to a preset complementation rule.

9. The method according to claim 8, wherein performing the complementation process on the blank image region according to the preset complementation rule includes:
according to the target image region determined by the region selection operation, automatically complementing remaining data under a scale of the user interface.

10. The method according to claim 3, wherein adjusting the to-be-displayed image data according to the first rule includes:
detecting whether a global selection operation is obtained on the user interface for displaying the image data; and
if the detection result is yes, performing a global zoom-in process on a region of the to-be-displayed image data.

11. The method according to claim 10, wherein performing the global zoom-in process on the region of to-be-displayed image data includes:
obtaining size information of the user interface;
determining size information of the to-be-displayed image data; and
according to the size information of the user interface and the size information of the to-be-displayed image data, performing a cropping process on the to-be-displayed image data according to an alignment manner.

12. The method according to claim 11, wherein the size information includes width information and height information, and according to the size information of the user interface and the size information of the to-be-displayed image data, performing the cropping process on the to-be-displayed image data according to the alignment manner includes:
when width information of the user interface is greater than height information of the user interface, according to width information and height information of the to-be-displayed image data, performing a scale-down sampling on the to-be-displayed image data according to the alignment manner, and cropping a portion of the screen exceeding the user interface.

13. The method according to claim 3, wherein adjusting the to-be-displayed image data according to the second rule includes:
obtaining size information of the user interface and size information of the to-be-displayed image data; and
according to the size information of the user interface and the size information of the to-be-displayed image data, performing a scaling process on the to-be-displayed image data.

14. The method according to claim 13, wherein according to the size information of the user interface and the size information of the to-be-displayed image data, performing the scaling process on the to-be-displayed image data includes:
detecting whether the size information of the to-be-displayed image data is greater than the size information of the user interface; and
if the detection result is yes, performing a scale-down process on the to-be-displayed image data according to the size information of the to-be-displayed image data; or
if the detection result is no, performing a scale-up process on the to-be-displayed image data according to the size information of the to-be-displayed image data.

15. The method according to claim 14, after performing the scaling process on the to-be-displayed image data, further including:
detecting whether a blank image region exists in an image data region obtained by performing the scaling process on the to-be-displayed image data; and
if the detection result is yes, performing a complementation process on the blank image region according to a preset complementation rule.

16. The method according to claim 15, wherein performing the complementation process on the blank image region according to the preset complementation rule includes:
through a manner of complementing a black border or a UI diagram, complementing the blank image region in the image data region obtained by performing the scaling process on the to-be-displayed image data.

17. An image display device, comprising a memory, a processor and a user interface, wherein:
the memory is configured to store program instructions; and
the processor is configured to execute the program instructions to implement following steps:
determining a display mode of a to-be-displayed image data on the user interface,
adjusting the to-be-displayed image data according to the determined display mode, and
displaying a target image obtained by adjusting the to-be-displayed image data on the user interface.

18. The device according to claim 17, wherein:
the processor is configured to obtain a mode selection operation on the user interface for displaying the to-be-displayed image data; and according to the mode selection operation, determine the display mode of the to-be-displayed image data on the user interface.

19. The device according to claim 17, wherein: the display mode includes a first display mode and a second display mode; and
the processor is configured to if the first display mode is determined on the user interface, adjust the to-be-displayed image data according to a first rule; and if the second display mode is determined on the user interface, adjust the to-be-displayed image data according to a second rule.

20. The device according to claim 19, wherein:
the processor is configured to detect whether a region selection operation is obtained on the user interface for displaying the image data; and if the detection result is yes, perform a local zoom-in process on the target image according to a target image region determined by the obtained region selection operation.

21. The device according to claim 20, wherein: the region selection operation includes a point selection operation, and
the processor is configured to obtain the point selection operation on the user interface for displaying the to-be-displayed image data, determine a point selection image region according to the point selection operation, and perform a zoom-in process on an image in the determined point selection image region.

22. The device according to claim 21, wherein:
the point selection operation includes a single click operation or a double click operation on a terminal screen displaying the image data.

23. The device according to claim 20, wherein: the region selection operation includes a frame selection operation, and
the processor is configured to obtain a frame selection operation on the user interface for displaying the to-be-displayed image data, determine a frame selection image region according to the frame selection operation, and perform a zoom-in process on an image in the determined frame selection image region.

24. The device according to any one of claims 21-23, wherein:
the processor is configured to detect whether a blank image region exists in an image data region obtained by performing the local zoom-in process on the target image region; and if the detection result is yes, perform a complementation process on the blank image region according to a preset complementation rule.

25. The device according to claim 24, wherein:
the processor is configured to according to the target image region determined by the region selection operation, automatically complement remaining data under a scale of the user interface.

26. The device according to claim 19, wherein:
the processor is configured to detect whether a global selection operation is obtained on the user interface for displaying the image data; and if the detection result is yes, perform a global zoom-in process on a region of the to-be-displayed image data.

27. The device according to claim 26, wherein:
the processor is configured to obtain size information of the user interface; determine size information of the to-be-displayed image data; and according to the size information of the user interface and the size information of the to-be-displayed image data, perform a cropping process on the to-be-displayed image data according to an alignment manner.

28. The device according to claim 27, wherein: the size information includes width information and height information, and
the processor is configured to when width information of the user interface is greater than height information of the user interface, according to width information and height information of the to-be-displayed image data, perform a scale-down sampling on the to-be-displayed image data according to the alignment manner, and crop a portion of the screen exceeding the user interface.

29. The device according to claim 20, wherein:
the processor is configured to obtain size information of the user interface and size information of the to-be-displayed image data; and according to the size information of the user interface and the size information of the to-be-displayed image data, perform a scaling process on the to-be-displayed image data.

30. The device according to claim 29, wherein:
the processor is configured to detect whether the size information of the to-be-displayed image data is greater than the size information of the user interface; and if the detection result is yes, perform a scale-down process on the to-be-displayed image data according to the size information of the to-be-displayed image data; or if the detection result is no, perform a scale-up process on the to-be-displayed image data according to the size information of the to-be-displayed image data.

31. The device according to claim 30, wherein:
the processor is configured to detect whether a blank image region exists in an image data region obtained by performing the scaling process on the to-be-displayed image data; and if the detection result is yes, perform a complementation process on the blank image region according to a preset complementation rule.

32. The device according to claim 31, wherein:
the processor is configured to through a manner of complementing a black border or a UI diagram, complement the blank image region in the image data region obtained by performing the scaling process on the to-be-displayed image data.

33. A gimbal, the gimbal carrying a camera device, comprising:
at least two gimbal frames, wherein the gimbal frames are configured to stabilize the camera device;
a user interface;
a memory, configured to store program instructions; and
a processor, configured to execute the program instructions to implement following steps:
determining a display mode of a to-be-displayed image data on the user interface,
adjusting the to-be-displayed image data according to the determined display mode, and
displaying a target image obtained by adjusting the to-be-displayed image data on the user interface.

34. The gimbal according to claim 33, wherein:
the processor is configured to obtain a mode selection operation on the user interface for displaying the to-be-displayed image data; and according to the mode selection operation, determine the display mode of the to-be-displayed image data on the user interface.

35. The gimbal according to claim 33, wherein: the display mode includes a first display mode and a second display mode; and
the processor is configured to: if the first display mode is determined on the user interface, adjust the to-be-displayed image data according to a first rule, and if the second display mode is determined on the user interface, adjust the to-be-displayed image data according to a second rule.

36. The gimbal according to claim 35, wherein:
the processor is configured to detect whether a region selection operation is obtained on the user interface for displaying the image data, and if the detection result is yes, perform a local zoom-in process on the target image according to a target image region determined by the obtained region selection operation.

37. The gimbal according to claim 36, wherein: the region selection operation includes a point selection operation, and
the processor is configured to obtain the point selection operation on the user interface for displaying the to-be-displayed image data, determine a point selection image region according to the point selection operation, and perform a zoom-in process on an image in the determined point selection image region.

38. The gimbal according to claim 37, wherein:
the point selection operation includes a single click operation or a double click operation on a terminal screen displaying the image data.

39. The gimbal according to claim 36, wherein: the region selection operation includes a frame selection operation, and
the processor is configured to obtain a frame selection operation on the user interface for displaying the to-be-displayed image data, determine a frame selection image region according to the frame selection operation, and perform a zoom-in process on an image in the determined frame selection image region.

40. The gimbal according to any one of claims 37-39, wherein:
the processor is configured to detect whether a blank image region exists in an image data region obtained by performing the local zoom-in process on the target image region; and if the detection result is yes, perform a complementation process on the blank image region according to a preset complementation rule.

41. The gimbal according to claim 40, wherein:
the processor is configured to according to the target image region determined by the region selection operation, automatically complement remaining data under a scale of the user interface.

42. The gimbal according to claim 35, wherein:
the processor is configured to detect whether a global selection operation is obtained on the user interface for displaying the image data; and if the detection result is yes, perform a global zoom-in process on a region of the to-be-displayed image data.

43. The gimbal according to claim 42, wherein:
the processor is configured to obtain size information of the user interface; determine size information of the to-be-displayed image data; and according to the size information of the user interface and the size information of the to-be-displayed image data, perform a cropping process on the to-be-displayed image data according to an alignment manner.

44. The gimbal according to claim 43, wherein: the size information includes width information and height information, and
the processor is configured to when width information of the user interface is greater than height information of the user interface, according to width information and height information of the to-be-displayed image data, perform a scale-down sampling on the to-be-displayed image data according to the alignment manner, and crop a portion of the screen exceeding the user interface.

45. The gimbal according to claim 35, wherein:
the processor is configured to obtain size information of the user interface and size information of the to-be-displayed image data; and according to the size information of the user interface and the size information of the to-be-displayed image data, perform a scaling process on the to-be-displayed image data.

46. The gimbal according to claim 45, wherein:
the processor is configured to detect whether the size information of the to-be-displayed image data is greater than the size information of the user interface; and if the detection result is yes, perform a scale-down process on the to-be-displayed image data according to the size information of the to-be-displayed image data; or if the detection result is no, perform a scale-up process on the to-be-displayed image data according to the size information of the to-be-displayed image data.

47. The gimbal according to claim 46, wherein:
the processor is configured to detect whether a blank image region exists in an image data region obtained by performing the scaling process on the to-be-displayed image data; and if the detection result is yes, perform a complementation process on the blank image region according to a preset complementation rule.

48. The gimbal according to claim 47, wherein:
the processor is configured to through a manner of complementing a black border or a UI diagram, complement the blank image region in the image data region obtained by performing the scaling process on the to-be-displayed image data.

49. The gimbal according to any one of claims 33-48, wherein:
the image data is an image data captured by the camera device.

50. A computer readable-storage medium, wherein the computer-readable storage medium stores a computer program, and the computer program, when being executed by a processor, implements the method according to any one of claims 1-16.
